(19) Europäisches Patentamt
European Patent Office
Office européen des brevets

(11) **EP 4 679 829 A1**

(12) **EUROPEAN PATENT APPLICATION**
published in accordance with Art. 153(4) EPC

(43) Date of publication:
**14.01.2026 Bulletin 2026/03**

(51) International Patent Classification (IPC):
*H04N 19/176* (2014.01)    *H04N 19/124* (2014.01)
*H04N 19/157* (2014.01)

(21) Application number: 23927227.1

(86) International application number:
**PCT/CN2023/141200**

(22) Date of filing: 22.12.2023

(87) International publication number:
**WO 2024/187887 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2023 CN 202310264176**

(71) Applicant: **Hangzhou Hikvision Digital
Technology Co., Ltd.
Hangzhou, Zhejiang 310051 (CN)**

(72) Inventors:
• **SUN, Yucheng
Hangzhou
Zhejiang 310051 (CN)**
• **CHEN, Fangdong
Hangzhou
Zhejiang 310051 (CN)**
• **WANG, Li
Hangzhou
Zhejiang 310051 (CN)**
• **WU, Xiaoyang
Hangzhou
Zhejiang 310051 (CN)**

(74) Representative: **Epping - Hermann - Fischer
Patentanwaltsgesellschaft mbH
Schloßschmidstraße 5
80639 München (DE)**

(54) **IMAGE RECONSTRUCTION METHOD AND APPARATUS, DEVICE, AND STORAGE MEDIUM**

(57)    The present application belongs to the technical field of image coding and discloses an image reconstruction method and apparatus, device, and storage medium. The image reconstruction method includes: acquiring a quantization parameter and a prediction mode corresponding to a current coding block; adjusting a prediction granularity corresponding to the prediction mode; predicting according to the adjusted prediction granularity to obtain a prediction sample block; obtaining a reconstructed sample block based on the prediction sample block and the quantization parameter.

acquiring a quantization parameter and a prediction mode corresponding to a current coding block, wherein the current coding block is an image coding block currently undergoing encoding or decoding processing — S10

adjusting a prediction granularity corresponding to the prediction mode — S20

predicting according to the adjusted prediction granularity to obtain a prediction sample block — S30

obtaining a reconstructed sample block based on the prediction sample block and the quantization parameter — S40

Fig.2

EP 4 679 829 A1

**EP 4 679 829 A1**

## Description

The present application claims the priority to a Chinese patent application No. 202310264176.7 filed with the China National Intellectual Property administration (CNIPA) on March 10, 2023, which is incorporated herein by reference in its entirety.

## Technical Field

The present application relates to the technical field of image coding, in particular to an image reconstruction method and apparatus, device and storage medium.

## Background

Light-weighted coding is a commonly used coding method at present. The compression rate of this coding method is below 10 times, and this coding method is generally required to be subjectively lossless, have simple hardware implementation, and be suitable for scenes with a high real-time requirement, small cache, and a high parallelism requirement. A simple prediction method such as intra prediction used in this process generally expresses a block division explicitly or agrees on a fixed size block division for unified prediction in a prediction process. However, in a situation where different contents exist in a coding unit (for example, the coding unit covers a boundary of an object), the prediction cannot be carried out efficiently if a unified prediction method is used at this time.

The above content is merely used to help understand the technical solution of the present application, and does not mean that the above content is acknowledged as the prior art.

## Summary

The main purpose of the present application is to provide an image reconstruction method and apparatus, device and storage medium, which aims to solve the technical problem that the prediction method cannot be adjusted according to different contents with the unified prediction method in the prior art, resulting in low prediction efficiency.

To achieve the above purpose, the present application provides an image reconstruction method, including:

acquiring a quantization parameter and a prediction mode corresponding to a current coding block, wherein the current coding block is an image coding block currently undergoing encoding or decoding processing;

adjusting a prediction granularity corresponding to the prediction mode;

predicting according to the adjusted prediction granularity to obtain a prediction sample block;

obtaining a reconstructed sample block based on the prediction sample block and the quantization parameter.

To achieve the above purpose, the present application provides an image reconstruction method, including:

acquiring a quantization parameter and a prediction mode corresponding to a current coding block, wherein the current coding block is an image coding block currently undergoing encoding or decoding processing;

decreasing a prediction granularity corresponding to the prediction mode;

predicting according to the adjusted prediction granularity to obtain a prediction sample block;

obtaining a reconstructed sample block based on the prediction sample block and the quantization parameter.

In addition, to achieve the above purpose, the present application further provides an image reconstruction apparatus, including:

a mode acquisition module, configured to acquire a quantization parameter and a prediction mode corresponding to a current coding block, wherein the current coding block is an image coding block currently undergoing encoding or decoding processing;

a granularity adjustment module, configured to adjust a prediction granularity corresponding to the prediction mode;

a feature prediction module, configured to predict according to the adjusted prediction granularity to obtain a prediction sample block;

a sample reconstruction module, configured to obtain a reconstructed sample block based on the prediction sample block.

In addition, to achieve the above purpose, the present application further provides an image reconstruction apparatus, including:

a mode acquisition module, configured to acquire a quantization parameter and a prediction mode corresponding to a current coding block, wherein the current coding block is an image coding block currently undergoing encoding or decoding processing;

a granularity adjustment module, configured to decrease a prediction granularity corresponding to the prediction mode;

a feature prediction module, configured to predict according to the adjusted prediction granularity to obtain a prediction sample block;

a sample reconstruction module, configured to obtain a reconstructed sample block based on the prediction sample block.

In addition, to achieve the above purpose, the present application further provides an encoding device including a memory, a processor and an encoding program stored on the memory and running on the processor, wherein the encoding program is configured to carry out the above image reconstruction method.

In addition, to achieve the above purpose, the present application further provides a decoding device including a memory, a processor and an decoding program stored on the memory and running on the processor, wherein the decoding program is configured to carry out the above image reconstruction method.

In addition, to achieve the above purpose, the present application further provides a storage medium having stored thereon an image reconstruction program, which, when executed, carries out the above image reconstruction method.

In the present application, the quantization parameter and the prediction mode corresponding to the current coding block are acquired, the prediction granularity corresponding to the prediction mode is adjusted, prediction is performed according to the adjusted prediction granularity to obtain the prediction sample block, and the reconstructed sample block is obtained based on the prediction sample block and the quantization parameter. Since the quantization parameter and the prediction mode for the current coding block are acquired firstly, and then the granularity corresponding to the prediction mode is adjusted and prediction is performed based on the adjusted granularity, and then the image reconstruction is performed according to the prediction result and the quantization parameter, it is ensured that the prediction granularity can be dynamically adjusted with the content of the current coding block, thus making the prediction more accurate, reducing the residual value in the coding process, and improving the subjective lossless performance.

**Brief Description of the Drawings**

Fig. 1 is a schematic structure diagram of an electronic device for a hardware operation environment involved in a solution in embodiments of the present application;

Fig. 2 is a schematic flow diagram of a first embodiment of an image reconstruction method of the present application;

Fig. 3 is a schematic diagram of an implementation flow of a light-weighted coding framework of an embodiment of the present application;

Fig. 4 is a schematic flow diagram of a second embodiment of the image reconstruction method of the present application;

Fig. 5 is a schematic flow diagram of a third embodiment of the image reconstruction method of the present application;

Fig. 6 is a schematic flow diagram of a fourth embodiment of the image reconstruction method of the present application;

Fig. 7 is a schematic flow diagram of a fifth embodiment of the image reconstruction method of the present application;

Fig. 8 is a schematic diagram of standard adjustment of a DC prediction mode in an embodiment of the present application;

Fig. 9 is a schematic diagram of standard adjustment of an IBC prediction mode in an embodiment of the present application;

Fig. 10 is a structural block diagram of a first embodiment of an image reconstruction apparatus of the present application.

The realization of the purpose, functional features and advantages of the present application will be further described with reference to the attached drawings in combination with the embodiments.

**Detailed Description**

It should be understood that the specific embodiments described here are merely used to explain the present application, and does not limit the present application.

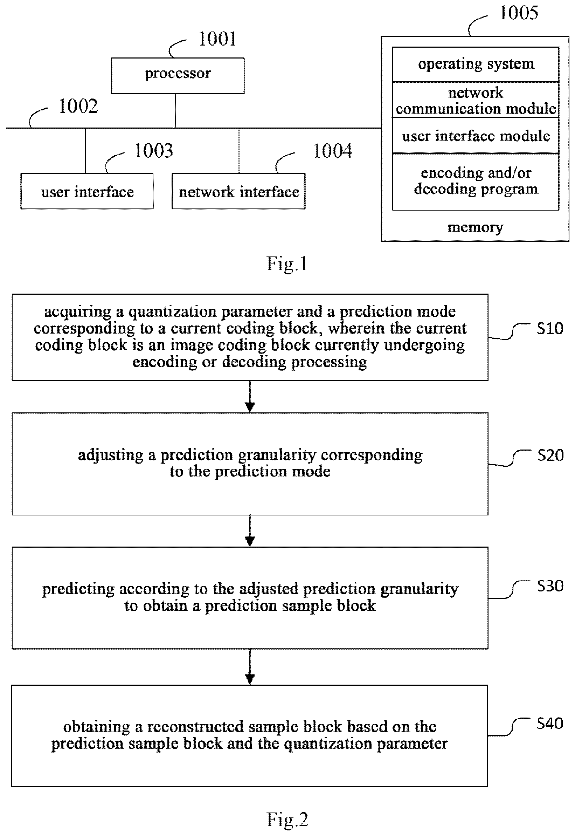

Referring to Fig. 1, Fig. 1 is a schematic structure diagram of an encoding device or a decoding device for a hardware operation environment involved in a solution in embodiments of the present application.

As shown in Fig. 1, the electronic device can include a processor 1001 such as a central processing unit (CPU), a communication bus 1002, a user interface 1003, a network interface 1004, and a memory 1005. The communication bus 1002 is used to realize the interconnection and communication among these components. The user interface 1003 may include a display, an input unit such as a keyboard, and the user interface 1003 may also include a standard wired interface and wireless interface. The network interface 1004 may include a standard wired interface and wireless interface (such as a Wireless-Fidelity (Wi-Fi) interface). The memory 1005 may be a high-speed Random Access Memory (RAM) or a stable Non-Volatile Memory (NVM), such as a disk memory. The memory 1005 may also be a storage apparatus independent of the processor 1001 described above.

Those skilled in the art may understand that the structure shown in Fig. 1 does not constitute a limitation on electronic device, and may include more or fewer components than shown in the figure, or combination of some components, or different component arrangements.

As shown in Fig. 1, the memory 1005 as a storage medium may include an operating system, a network communication module, a user interface module and an encoding program and/or a decoding program.

In the electronic device shown in Fig. 1, the network interface 1004 is mainly used for data communication with a network server; the user interface 1003 is mainly used for data interaction with users; the processor 1001 and memory 1005 in the electronic device of the present application may be arranged in the encoding device or decoding device. The electronic device calls the encoding program and/or decoding program stored in the memory 1005 through the processor 1001, and executes the image reconstruction method provided by the embodiments of the present application.

An embodiment of the present application provides an image reconstruction method. Referring to Fig. 2, Fig. 2 is a schematic flow diagram of a first embodiment of an image reconstruction method of the present application.

In the present embodiment, the image reconstruction method includes the following steps:

Step S10: acquiring a quantization parameter and a prediction mode corresponding to a current coding block, wherein the current coding block is an image coding block currently undergoing encoding or decoding processing.

It should be noted that the executing entity in the present embodiment can be a decoding device when decoding image data. The decoding device can be an electronic device such as a personal computer, a server and so on, or, of course, can be other devices that can achieve the same or similar functions, which is not limited in the present embodiment.

During image encoding, the encoding device generally performs the image reconstruction on the encoded image bitstream after encoding is completed, and determines whether the encoding process needs to be adjusted based on the image quality of the reconstructed image. Therefore, the executing entity in the present embodiment can also be an encoding device. The encoding device can also be an electronic device such as a personal computer, a server and so on, or, of course, can also be other devices that can achieve the same or similar functions, which is not limited in the present embodiment. In the present embodiment and the following various embodiments, the image reconstruction method of the present application is described by taking the encoding device or decoding device as an example.

It should be noted that when light-weighted coding is performed on image data, a light-weighted coding framework generally has modules including a block division module, a rate control module, a prediction module, a transformation module, a quantization module, a entropy encoding module, etc. The block division module will divide the image data into individual image encoding blocks, and then the encoding process is performed on the divided image encoding blocks in turn. The current coding block can be an image coding block that is currently being coded or decoded.

In the process of light-weighted coding, technical terms that may be involved include: Prediction Pixel, Rate-Distortion Optimized, Intra Prediction, Rate Control, Bitstream Buffer, Fallback Mode, Entropy encoding, etc., which will be described here.

The prediction pixel refers to a pixel value derived from the encoded and decoded pixel. A residual is obtained by a difference between an original pixel and the prediction pixel, and then the residual transformation and quantization as well as coefficient encoding are performed. In particular, the inter prediction pixel refers to a pixel value derived from the reference frame (reconstructed pixel frame) by the current block. Because the pixel positions are discrete, the final prediction pixel needs to be acquired through difference operation. The closer the prediction pixel is to the original pixel, the smaller the residual energy obtained by subtracting the prediction pixel from the original pixel is, and the higher the encoding compression performance is.

There are two major indexes to evaluate encoding efficiency: code rate and Peak Signal to Noise Rate (PSNR). The smaller the bit stream, the higher the compression rate; the larger the PSNR, the better the quality of the reconstructed image. The discriminant formula is essentially a comprehensive evaluation of both in the mode selection. A cost corresponding to the mode is $J(mode)=D+\lambda *R$, wherein, D denotes Distortion, which is usually measured by the Sum of the Squared Errors (SSE) index, and SSE refers to the mean sum of the squared difference between a reconstructed block and a source image; $\lambda$ is a Lagrange multiplier; R is the actual number of bits required for encoding an image block in this mode, including the total number of bits required for encoding mode information, motion information, residual, etc. If the Remote Data Object (RDO) principle is used to compare encoding modes and make a decision in the mode selection, the best encoding performance can usually be ensured.

Intra prediction refers to perform the predictive encoding using the reconstructed pixel value of a spatial adjacent block (which is in the same frame image as the current block) of the current block.

Rate control refers to controlling the stability of the code rate, which is generally achieved by adjusting a quantization step.

In the light-weighted compression scenario, there is a bitstream buffer for storing bits of each coding unit. In the fixed bit rate control scenario, the bitstream buffer will put bits of each rate control unit into the bitstream buffer after the rate control unit finishes the coding, and simultaneously remove the certain number of bits from the bitstream buffer. The rate control purpose of the light-weighted compression is to make the bitstream buffer not overflow and not underflow. The overflow refers to a situation where the bitstream buffer is already full but there are still bits that have not been put into the buffer, and the underflow refers to a situation where there are no bits in the bitstream buffer but the number of bits that have been removed does not reach the required number.

The fallback mode is mainly to ensure that the bitstream buffer does not overflow. The number of bits obtained by encoding in this mode must be less than or equal to the fixed number of bits that need to be removed from the stream buffer. After the fallback mode is encoded/decoded, the "water level" of the bitstream buffer does not rise, and thus no overflow occurs.

Entropy encoding refers to a lossless encoding method based on the principle of information entropy, which is located at the last processing module of video compression, and converts a series of element symbols used to represent a video sequence into a binary bitstream for transmission or storage. The output data of the entropy encoding module is a final bitstream obtained after an original video is compressed. Entropy encoding can effectively remove the statistical redundancy of these video element symbols, and is one of the important tools to ensure the compression efficiency of video encoding.

It should be noted that the quantization parameter corresponding to the current coding block can be a parameter used when performing the quantization processing on the current coding block during light-weighted compression, such as a quantization step, etc. The prediction mode is a prediction mode used when performing the pixel prediction on the current coding block during light-weighted compression, such as a planar prediction mode, a DC (Direct Current) prediction mode, an IBC (Intra Block Copy) prediction mode, an angle prediction mode, etc.

In the specific implementation, if the executing entity is the encoding device, acquiring the quantization parameter and the prediction mode corresponding to the current coding block can include determining, according to information preset by an administrator of the encoding device, the quantization parameter used when performing the quantization process on the current coding block, and the prediction mode used when performing the prediction during encoding. If the executing entity is the decoding device, acquiring the quantization parameter and the prediction mode corresponding to the current coding block can include reading the quantization parameter and the prediction mode from the image bitstream.

Step S20: adjusting a prediction granularity corresponding to the prediction mode.

It should be noted that when selecting samples for prediction in different prediction modes, the prediction granularities for selecting the samples are not the same. Even in the same prediction mode, when using different prediction granularities to select samples, the actual effect achieved are different depending on the different sizes of the prediction granularities. The smaller the prediction granularity is, the more flexible the sample selection will be, and the smaller the difference between the selected samples and the prediction samples will be, the more details will be retained. At this time, the residual calculated according to the prediction result will be smaller. However, the standard of the selected samples is smaller at this time, and the number of samples that can be predicted in one prediction process will also be smaller. Therefore, for the prediction on the same image block, the smaller the prediction granularity is, the more times of prediction need to be performed, and the longer the overall consumed time is. Therefore, when predicting the image coding block, it is necessary to set a reasonable prediction granularity according to the content of the image coding block.

In specific implementation, adjusting the prediction granularity corresponding to the prediction mode can include adjusting the prediction granularity corresponding to the prediction mode to another prediction granularity, such as adjusting a whole block prediction to a quadtree prediction, adjusting the quadtree prediction to the whole block prediction, or adjusting a binary tree prediction to the quadtree prediction, etc..

In a possible implementation of the present embodiment, the prediction granularity for the image coding block at a specific position can be adjusted. Then, the step S20 described in the present embodiment can include: if the current coding block is at a preset specified position, adjusting the prediction granularity corresponding to the prediction mode.

It should be noted that the preset specified position can be preset by the administrator of the encoding device or decoding device.

For example, assuming that the preset specified position is set to the first row of a slice, then, the prediction granularity corresponding to the prediction mode for the current coding block can be adjusted if the current coding block is located in the first row of the slice; if the preset specified position is set to the first column of the slice, then, the prediction granularity corresponding to the prediction mode for the current coding block can be adjusted if the current coding block is located in the first column of the slice.

In a possible implementation of the present embodiment, since adjusting of the prediction granularity may affect the bitstream buffer, causing the overflow of the bitstream buffer, then, the prediction granularity can also be adjusted in a situation where a load of the bitstream buffer is low. Then, the step S20 described in the present embodiment can include:

acquiring a utilization rate of the bitstream buffer;

if the utilization rate is less than a preset utilization rate threshold, adjusting the prediction granularity corresponding to the prediction mode.

It should be noted that the utilization rate of the bitstream buffer can be a ratio of an amount of data currently buffered in the bitstream buffer to a maximum amount of data allowed to be buffered in the bitstream buffer. The preset utilization rate threshold can be a preset fixed threshold or a value read from high-level syntax, wherein the high-level syntax can at least include sequence-level syntax, image-level syntax or slice-level syntax.

It can be understood that if the utilization rate is less than the preset utilization rate threshold, it is indicated that the load of the bitstream buffer at the current moment is low. Then, adjusting of the prediction granularity will not pose a risk of overflow in the stream buffer. Therefore, the prediction granularity corresponding to the prediction mode can be adjusted.

In a possible implementation of the present embodiment, the administrator of the encoding device or decoding device may further preset the adjustment of the quantization parameter. Then, before step S20 described in the present embodiment, the method can further include: adjusting the quantization parameter.

Then, in order to ensure that the decoding or encoding can be normally performed while improving the prediction efficiency, the prediction granularity can be adjusted according to the method for adjusting the quantization parameter. Then, the step S20 described in the present embodiment can include:

acquiring a quantization parameter adjustment manner for adjusting the quantization parameter;

adjusting the prediction granularity corresponding to the prediction mode according to the quantization parameter adjustment manner.

It should be noted that adjusting the quantization parameter can include adjusting the quantization parameter according to at least one of characteristic information such as indicative information, visual complexity information, coding complexity information, the position of the current coding block, the measurement value of each sample in the current coding block, and the reconstructed samples around the current coding block. The quantization parameter adjustment manner actually used can be determined according to the indicative information which can be preset by the administrator of the encoding device or decoding device according to the actual needs.

In the implementation process, when adjusting the quantization parameter, the quantization parameter adjustment can also be performed on only a part of the current coding block. Then, the step of adjusting the quantization parameter described in the present embodiment can include:

adjusting the quantization parameter corresponding to a target sample in the current coding block.

It should be noted that the target sample can be all the samples in the current coding block, or the target sample can be a sample on which the quantization parameter adjustment is specified to be performed. The target sample can be specified in advance by the administrator of the encoding device or decoding device, or can be determined according to the indicative information extracted from the bitstream, which is not limited in the present embodiment.

In actual use, the administrator of the encoding device or decoding device can preset the local indicative information. If the local indicative information indicates that the quantization parameter for all samples in the current coding block are to be adjusted, then, the quantization parameter for all samples in the current coding block can be adjusted. If the local indicative information indicates that the quantization parameter for all samples in the current coding block are not to be adjusted, then, the quantization parameter for all samples in the current coding block are not adjusted.

If a preset area is specified in the local indicative information, then, only a quantization parameter corresponding to a sample in the preset area in the current coding block can be adjusted. For example, after knowing the position of a visually simple area in the current coding block, the administrator can set the visually simple area as the preset area, and set the local indicative information based on the position of the visually simple area. Then, the quantization parameter adjustment device will only perform the quantization parameter adjustment on the visually simple area in the current coding block.

In the specific implementation, adjusting the prediction granularity corresponding to the prediction mode according to the quantization parameter adjustment manner for adjusting the quantization parameter can be based on conditions of adjusting the quantization parameter.

For example, whether to adjust the quantization parameter is determined according to the visual complexity information and/or coding complexity information of the current coding block. If it is finally determined that the quantization parameter needs to be adjusted, then, the prediction granularity corresponding to the prediction mode can be directly adjusted;

whether to adjust the quantization parameter can also be determined by the indicative information acquired from the image bitstream. If it is determined that the quantization parameter needs to be adjusted according to the indication of the indicative information, then, the prediction granularity corresponding to the prediction mode can be directly adjusted;

whether to adjust the quantization parameter can also be determined according to the position of the current coding block. If it is finally determined that the quantization parameter needs to be adjusted, then, whether to adjust the prediction granularity for the prediction mode can then be determined according to the visual complexity information and/or coding complexity information of the current coding block;

whether to adjust the quantization parameter can also be determined according to the measurement value of samples in the current coding block. If it is finally determined that the quantization parameter needs to be adjusted, then, whether to adjust the prediction granularity for the prediction mode can then be determined according to the measurement value of samples in the current coding block;

whether to adjust the quantization parameter can also be determined according to the reconstructed samples around the current coding block (such as the measurement value of the reconstructed samples around the current coding block). If it is finally determined that the quantization parameter needs to be adjusted , then, whether to adjust the prediction granularity for the prediction mode can then be determined according to the reconstructed samples around the current coding block.

Step S30: predicting according to the adjusted prediction granularity to obtain a prediction sample block.

It should be noted that after the prediction granularity is adjusted to a reasonable range, pixel prediction can be performed according to the adjusted prediction granularity, to obtain a prediction sample block corresponding to the current coding block.

Step S40: obtaining a reconstructed sample block based on the prediction sample block and the quantization parameter.

It should be noted that the process of obtaining the reconstructed sample block according to the prediction sample block and the quantization parameter at the encoding end is different from that at the decoding end. If the executing entity is the encoding device, the encoding device can calculate the residual value of the current coding block according to the prediction sample block, and then quantize the residual value through the quantization parameter, to generate an image bitstream. Generally, the encoding device also needs to detect the performance of light-weighted compression. Therefore, after quantizing, the encoding device can further perform inverse quantization on the quantized data according to the quantization parameter, and after the inverse quantization, the encoding device can perform image reconstruction based on the inverse quantized data in combination with the prediction sample block, to obtain the reconstructed sample block. After that, the encoding device will compare the reconstructed sample block with the current coding block to determine the encoding performance, and determine whether some of the parameters in the light-weighted compression process need to be determined according to the encoding performance.

If the executing entity is the decoding device, the decoding device can read the quantized image data from the image bitstream sent by the encoding device, perform the inverse quantization on the quantized image data according to the quantization parameter, and perform image reconstruction by combining the prediction sample block obtained by predicting and the inverse quantized data, to obtain the reconstructed sample block.

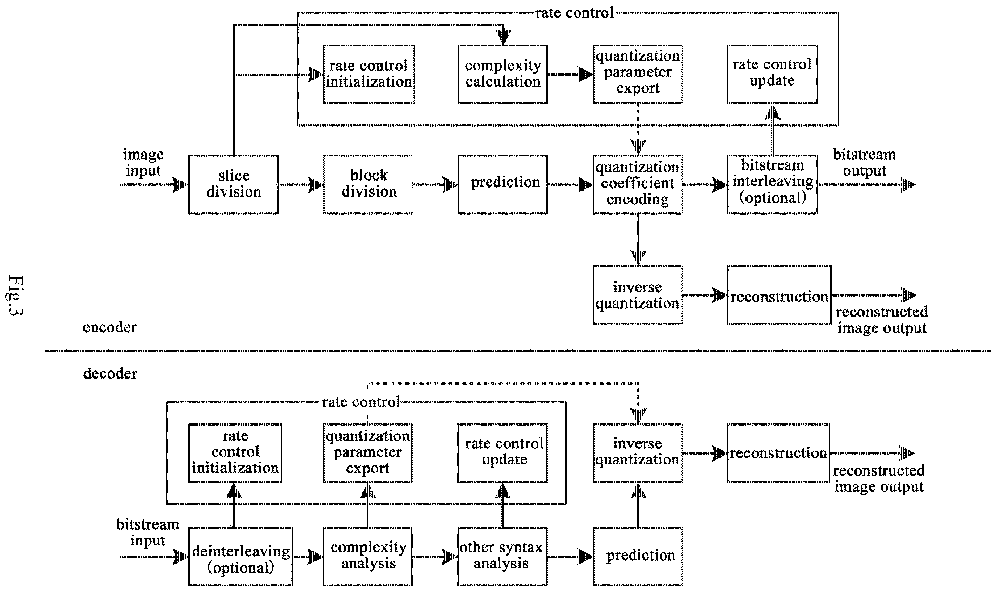

For ease of understanding, it is illustrated in combination with Fig. 3, but the present solution is not limited to this. Fig. 3 is a schematic diagram of an implementation flow of a light-weighted coding framework of the present embodiment. As shown in Fig. 3, the light-weighted coding framework is composed of an encoder and a decoder, wherein the encoder includes multiple modules such as a division module (slice division and block division), a prediction module, a quantization coefficient encoding module, a bitstream interleaving module, and the like; the decoder includes a de-interleaving module, a complexity parsing module, other syntax parsing modules, a prediction module, an inverse quantization module, a reconstruction module, and the like. Wherein, the rate control module in the encoder or the decoder can be used to carry out the steps of adjusting the prediction granularity corresponding to the prediction mode in the present embodiment.

In the present embodiment, the quantization parameter and the prediction mode corresponding to the current coding block are acquired, the prediction granularity corresponding to the prediction mode is adjusted, prediction is performed according to the adjusted prediction granularity to obtain the prediction sample block, and the reconstructed sample block is obtained based on the prediction sample block and the quantization parameter. Since the quantization parameter and the prediction mode for the current coding block are acquired firstly, and then the granularity corresponding to the prediction mode is adjusted and prediction is performed based on the adjusted granularity, and then the image reconstruction is performed according to the prediction result and the quantization parameter, it is ensured that the prediction granularity can be dynamically adjusted with the content of the current coding block, thus making the prediction more accurate, reducing the residual value in the coding process, and improving the subjective lossless performance.

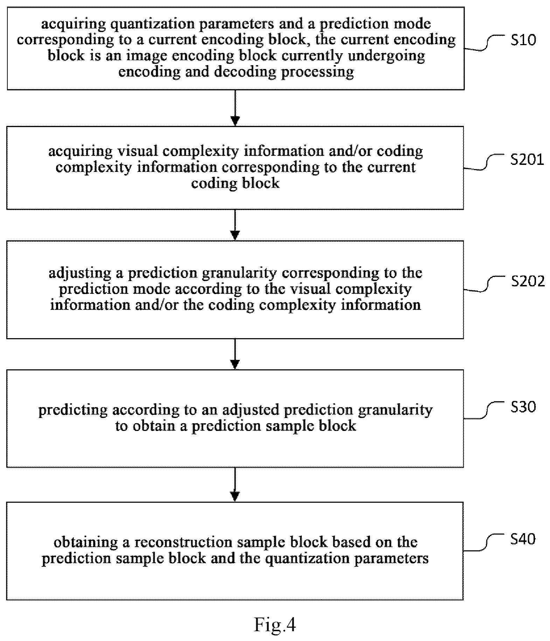

Referring to Fig. 4, Fig. 4 is a schematic flow diagram of a second embodiment of the image reconstruction method of the present application.

Based on the above first embodiment, the step S20 of the image reconstruction method in the present embodiment includes:

Step S201: acquiring visual complexity information and/or coding complexity information corresponding to the current coding block.

It should be noted that the visual complexity information can be the human eye sensitivity to an area of the current coding block. The human eye is often less sensitive to a complex area and more sensitive to a simple area. The coding complexity information can be the cost required to encode the current coding block. Often, the visually complex block incur higher costs because it is difficult to predict, and the visually simple block costs less because it is easy to predict. Therefore, in some applications of the present application, the coding complexity information can be made equal to the visual complexity information to simplify operations, because the visually simple area is often easy to be encoded.

However, in special situations, such as situations of the lack of prediction mode or mismatching of coefficient coding algorithm, resulting in that the visually simple block may also lead to a large coding cost. Then, the coding complexity information can no longer be directly equal to the visual complexity information, and instead can be analyzed separately to calculate the coding complexity information.

In the specific implementation, if the executing entity in the present embodiment is the encoding device, that is, at the encoding end where light-weighted coding processing is performed on image data, then, acquiring the visual complexity information and/or coding complexity information corresponding to the current coding block can include calculating the visual complexity according to a texture complexity to obtain the visual complexity information, and calculating a coding complexity of the current coding block according to a pre-coding mode to obtain the coding complexity information;

if the executing entity in the present embodiment is the decoding device, that is, at the decoding end where light-weighted coding processing is performed on image data, since the encoding end will calculate the visual complexity information and/or coding complexity information in advance, and encode the visual complexity information and/or coding complexity information into the bitstream, then acquiring the visual complexity information and/or coding complexity information corresponding to the current coding block can includde reading the visual complexity information and/or coding complexity information corresponding to the current coding block from the image bitstream. Of course, if necessary, the visual complexity information can also be derived from the reconstructed pixels around the current coding block.

Step S202: adjusting a prediction granularity corresponding to the prediction mode according to the visual complexity information and/or the coding complexity information.

It should be noted that, since the visual complexity information and the coding complexity information can reflect the complexity of the content contained in the coding block to a certain extent, the prediction granularity corresponding to the prediction mode can be adjusted according to the visual complexity information and/or the coding complexity information to set the prediction granularity to a reasonable value.

In a possible implementation of the present embodiment, whether the prediction granularity corresponding to the prediction mode needs to be adjusted can be determined according to the visual complexity information and/or coding complexity information. The step S202 of the present embodiment can include:

if the visual complexity information is less than or equal to a preset complexity threshold, adjusting the prediction granularity corresponding to the prediction mode;
or,

if the coding complexity information is less than or equal to the preset complexity threshold, adjusting the prediction granularity corresponding to the prediction mode;
or,

if the visual complexity information is less than a preset visual complexity threshold and the coding complexity information is greater than a preset coding complexity threshold, adjusting the prediction granularity corresponding to the prediction mode.

It should be noted that the preset complexity threshold, the preset visual complexity threshold and the preset coding complexity threshold can all be preset fixed thresholds or values read from high-level syntax, wherein the high-level syntax can at least include sequence level syntax, image-level syntax or slice-level syntax.

In actual use, if any one of the visual complexity information and coding complexity information is less than or equal to the preset complexity threshold, it is indicated that an area of the current coding block is the visually simplest area. When predicting such area, it is unnecessary to retain too much detail, and then, the prediction granularity corresponding to the prediction mode can be adjusted to ensure the efficiency of prediction. Then, the preset complexity threshold can be set.

If the visual complexity information is less than the preset visual complexity threshold, and the coding complexity information is greater than the preset coding complexity threshold, it is indicated that an area of the current coding block is a visually simple area with complex coding. Then, the prediction granularity corresponding to the prediction mode can be adjusted, to avoid overflow of the bitstream buffer in the coding process.

The adjustment range of the prediction granularity (such as increasing by a certain value, decreasing by a certain value, or keeping unchanged) can be preset by the administrator of the encoding device or decoding device according to the actual needs, which is not limited in the present embodiment.

In a possible implementation of the present embodiment, it can be set that only the prediction granularity corresponding to the image coding block at a specific position is adjusted, for example, the prediction granularity corresponding to the image coding block at the specific position and in a visually simpler area is adjusted. Then, the step S202 of the present embodiment can include:

if the visual complexity information is less than the preset visual complexity threshold and the current coding block is at a preset specified position, adjusting the prediction granularity corresponding to the prediction mode;
or,

if the coding complexity information is less than the preset coding complexity threshold, and the current coding block is at the preset specified position, adjusting the prediction granularity corresponding to the prediction mode;
or,

if the visual complexity information is less than the preset visual complexity threshold, the coding complexity information is less than the preset coding complexity threshold, and the current coding block is at the preset specified position, adjusting the prediction granularity corresponding to the prediction mode.

It should be noted that both the preset visual complexity threshold and the preset coding complexity threshold can be preset fixed thresholds or values read from high-level syntax, wherein the high-level syntax can at least include sequence-level syntax, image-level syntax or slice-level syntax. The preset specified position can be preset by the administrator of the encoding device or decoding device.

It can be understood that if the visual complexity information is less than the preset visual complexity threshold,

and the current coding block is at the preset specified position, it is indicated that the area where the current coding block is located is a visually simpler area, and the current coding block is at a specific position specified by the administrator in advance. Therefore, the prediction granularity corresponding to the prediction mode can be adjusted. Similarly, when the coding complexity information is less than the preset coding complexity threshold and the current coding block is at the preset specified position, or when the visual complexity information is less than the preset visual complexity threshold, the coding complexity information is less than the preset coding complexity threshold and the current coding block is at the preset specified position, the prediction granularity corresponding to the prediction mode can be adjusted.

The adjustment range (such as increasing by a certain amount, decreasing by a certain amount, or keeping unchanged) in adjusting the prediction granularity corresponding to the prediction mode can be preset by the administrator of the encoding device or decoding device.

In a possible implementation of the present embodiment, whether to adjust the prediction granularity corresponding to the current coding block can also be determined in combination with the relevant information of other coding blocks which are in the same coding unit as the current coding block. Then, the step S202 described in the present embodiment can include:

acquiring quantization parameters corresponding to other coding blocks which are in the same coding unit as the current coding block;

adjusting the prediction granularity corresponding to the prediction mode if all of the quantization parameters corresponding to the other coding blocks are not a preset parameter value, the current coding block is not at the preset specified position, and the coding complexity information is less than the preset coding complexity threshold.

It should be noted that both the preset parameter value and the preset coding complexity threshold can be preset fixed thresholds or values read from the high-level syntax, wherein the high-level syntax can at least include sequence-level syntax, image-level syntax or slice-level syntax.

For example, assuming that the preset parameter value is set to 0, the preset specified position is set to not be the first row of the splice, and the preset coding complexity threshold is set to param15, then, then the prediction granularity is adjusted if the current coding block is not in the first row of the splice, the coding complexity information is less than param15, and the quantization parameters Q of all of the other coding blocks in the coding unit where the current coding block is located are not 0.

In the present embodiment, the visual complexity information and/or coding complexity information corresponding to the current coding block are acquired; and the prediction granularity corresponding to the prediction mode is adjusted according to the visual complexity information and/or the coding complexity information. Since the visual complexity information and the coding complexity information can reflect the complexity of the content contained in the current coding block to a certain extent, the prediction granularity can be reasonably adjusted according to the visual complexity information and/or the coding complexity information, thus improving the prediction efficiency in the image reconstruction process.

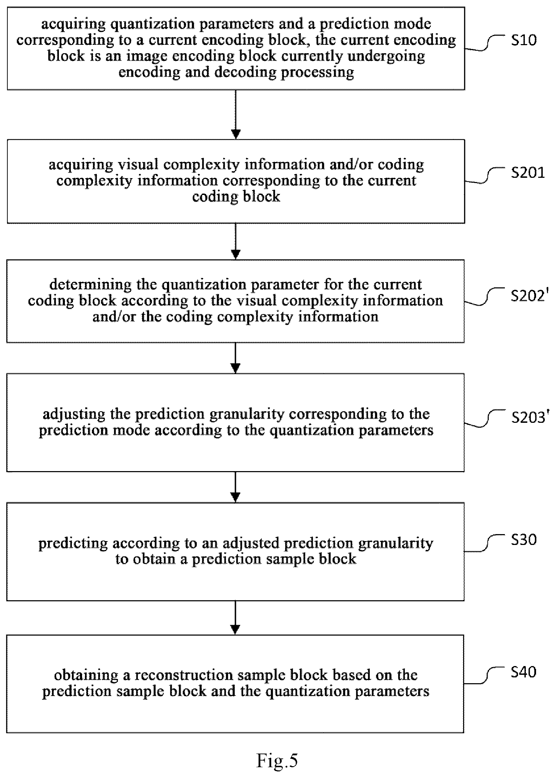

Referring to Fig. 5, Fig. 5 is a schematic flow diagram of a third embodiment of an image reconstruction method of the present application.

Based on the above second embodiment, after the step S201, the image reconstruction method in the present embodiment further includes:

Step S202': determining the quantization parameter for the current coding block according to the visual complexity information and/or the coding complexity information.

It should be noted that determining the quantization parameter for the current coding block according to the visual complexity information and/or the coding complexity information can include directly acquiring the quantization parameter for the current coding block according to at least one of the visual complexity information and coding complexity information. For example, if the visual complexity information corresponds to the simplest vision, the value of the quantization parameter for the current coding block is directly derived as BitDepth-7, wherein, BitDepth is the bit depth of a coding channel.

Of course, when determining the quantization parameter, the quantization parameter can also be adjusted according to the actual quantization design. For example, if the quantization design uses 8-point fractional quantization, then if the visual complexity information corresponds to the simplest vision, the value of the quantization parameter for the current coding block is (BitDepth-7) *8.

Step S203': adjusting a prediction granularity corresponding to the prediction mode according to the quantization parameter.

It should be noted that adjusting the prediction granularity corresponding to the prediction mode according to the quantization parameter can include adjusting the prediction granularity only when the quantization parameter is in a specific interval. The adjustment range of the prediction granularity (such as increasing by a certain value or decreasing by a certain value) can be preset by the administrator of the encoding device or the decoding device according to the actual needs, which is not limited in the present embodiment.

In a possible implementation of the present embodiment, the prediction granularity corresponding to the prediction mode can be adjusted when the quantization parameter is small. Then, the step S203' described in the present embodiment can include:

if the quantization parameter is less than or equal to a preset quantization threshold, then adjusting the prediction granularity corresponding to the prediction mode.

It should be noted that the preset quantization threshold can be a preset fixed threshold or a value read from the high-level syntax, wherein the high-level syntax can at least include sequence-level syntax, image-level syntax or slice-level syntax.

It can be understood that if the quantization parameter is less than or equal to the preset quantization threshold, meaning that the quantization parameter corresponding to the current coding block is small, then, the prediction granularity can be adjusted.

In a possible implementation of the present embodiment, since adjusting of the prediction granularity may greatly affect the bitstream buffer, which may cause a risk of the overflow in the bitstream buffer. To avoid this situation, the step S203' in the present embodiment can include:

acquiring a utilization rate of the bitstream buffer;

if the quantization parameter is less than or equal to the preset quantization threshold and the utilization rate is less than a preset utilization rate threshold, adjusting the prediction granularity corresponding to the prediction mode.

It should be noted that the utilization rate of the bitstream buffer can be a ratio of an amount of data currently buffered in the bitstream buffer to a maximum amount of data allowed to be buffered in the bitstream buffer. The preset utilization rate threshold can be a preset fixed threshold or a value read from the high-level syntax, wherein the high-level syntax can at least include sequence-level syntax, image-level syntax or slice-level syntax.

It can be understood that if the utilization rate of the bitstream buffer is less than the preset utilization rate threshold, it is indicated that the load of the bitstream buffer at the current moment is low. Then, adjusting of the prediction granularity will not pose a risk of overflow in the stream buffer. Therefore, the prediction granularity corresponding to the prediction mode can be adjusted.

In the present embodiment, the quantization parameter for the current coding block is determined according to the visual complexity information and/or the coding complexity information; and the prediction granularity corresponding to the prediction mode is adjusted according to the quantization parameter. Since the quantization parameter used in quantizing the current coding block can reflect the complexity of the content contained in the current coding block to a certain extent, the prediction granularity can be reasonably adjusted according to the quantization parameter, thus ensuring the prediction efficiency in the image reconstruction process.

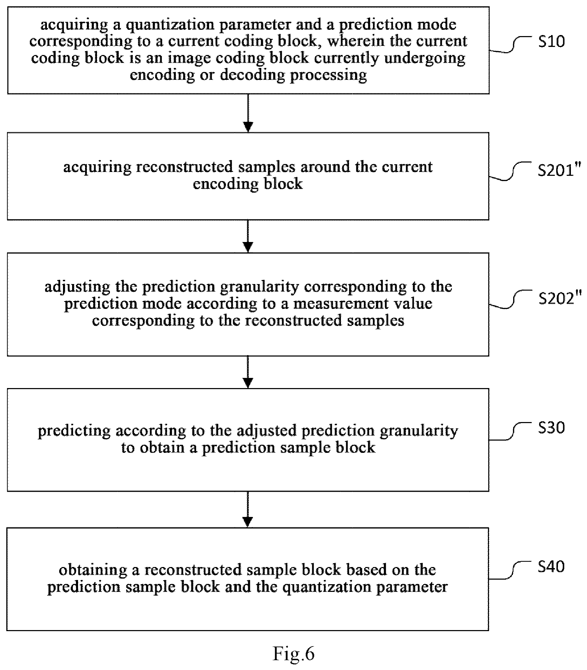

Referring to Fig. 6, Fig. 6 is a schematic flow diagram of a fourth embodiment of an image reconstruction method of the present application.

Based on the above first embodiment, the step S20 of the image reconstruction method in the present embodiment includes:

step S201": acquiring reconstructed samples around the current coding block.

It should be noted that, when acquiring the reconstructed samples around the current coding block, the reconstructed samples can be acquired according to an order in which samples are reconstructed. For example, if the reconstruction order is from left to right and reconstruction is performed row by row, then, the left reconstructed samples (a reconstructed sample block on the left side of the current coding block) and/or the upper reconstructed samples (a reconstructed sample block on the upper side of the current coding block) can be selected as the reconstructed samples around the current coding block.

Step S202": adjusting the prediction granularity corresponding to the prediction mode according to a measurement value corresponding to the reconstructed samples.

It should be noted that the measurement value can be a variance, mean or gradient value; of course, the measurement value can also be other measurement values with similar functions, which is not limited in the present embodiment.

In actual use, different measurement values are used. Therefore, the determining methods for determining whether the prediction granularity needs to be adjusted are also different. If the measurement value used is the variance, then the step S202" described in the present embodiment can include:

if a variance of the upper reconstructed samples is greater than a preset upper threshold, adjusting the prediction granularity corresponding to the prediction mode;

or,

if a variance of the left reconstructed samples is less than a preset left threshold, adjusting the prediction granularity corresponding to the prediction mode.

It should be noted that both the preset upper threshold and the preset left threshold can be preset fixed thresholds, or values read from the high-level syntax, wherein the high-level syntax can at least include sequence-level syntax, image-level syntax or slice-level syntax.

It should be noted that if the variance of the upper reconstructed samples is greater than the preset upper threshold, it is indicated that the prediction effect may not be ideal if the upper reconstructed samples are used for prediction at this time. Therefore, at this time, the prediction granularity corresponding to the prediction mode can be adjusted to increase the flexibility of selecting samples in prediction, so that other samples around the current coding block can be selected for prediction.

If the variance of the left reconstructed samples is less than the preset left threshold, it is indicated that the prediction effect may be better if the left reconstructed samples are used for prediction at this time. Therefore, the prediction granularity corresponding to the prediction mode can be adjusted to increase the flexibility of selecting samples in prediction, so that the left sample can be directly selected for prediction.

In actual use, if the measurement value used is the mean, then, the step S202" described in the present embodiment can include:

acquiring an absolute value of a difference between a mean of the upper reconstructed samples and a mean of the left reconstructed samples;

if the absolute value of the difference is less than a preset difference threshold, adjusting the prediction granularity corresponding to the prediction mode.

It should be noted that the preset difference threshold can be a preset fixed threshold or a value read from the high-level syntax wherein the high-level syntax can at least include sequence-level syntax, image-level syntax or slice-level syntax.

It should be understood that if the absolute value of the difference between the mean of the upper reconstructed samples and the mean of the left reconstructed samples is less than the preset difference threshold, it is indicated that the difference between the upper reconstructed samples and the left reconstructed samples is small at this time, and the prediction effect when using the left reconstructed samples for prediction is close to that when using the upper reconstructed samples for prediction. Then, the prediction granularity corresponding to the prediction mode can be adjusted to increase the flexibility of selecting samples in prediction.

In actual use, if the measurement value used is the gradient value, then, the step S202" described in the present embodiment can include:

if gradient values corresponding to the reconstructed samples are all less than a first preset gradient value, adjusting the prediction granularity corresponding to the prediction mode;
or,

if a gradient value corresponding to any one of the reconstructed samples is greater than a second preset gradient value, adjusting the prediction granularity corresponding to the prediction mode, wherein the second preset gradient value is greater than the first preset gradient value.

It should be noted that both the first preset gradient value and the second preset gradient value can be preset fixed thresholds or values read from the high-level syntax, wherein the high-level syntax can at least include sequence-level syntax, image-level syntax or slice-level syntax. The second preset gradient value is greater than the first preset gradient value.

It should be understood that if the gradient values corresponding to the reconstructed samples are all less than the first preset gradient value, it is indicated that the difference degree of each reconstructed sample is small. Then, the prediction granularity corresponding to the prediction mode can be adjusted to increase the flexibility of selecting samples in prediction, so that a part of the reconstructed samples can be extracted for prediction.

If the gradient value corresponding to any one of the reconstructed samples is greater than the second preset gradient value, it is indicated that there is a sample with a large difference degree among the reconstructed samples at this time. Then, the prediction granularity corresponding to the prediction mode can be adjusted to reduce the flexibility of selecting samples in prediction, so that more samples can be selected for prediction, thus ensuring the accuracy of prediction.

The adjustment range of the prediction granularity can be preset by the administrator of the encoding device or the decoding device according to the actual needs, which is not limited in the present embodiment.

In the present embodiment, the reconstructed samples around the current coding block are acquired; the prediction granularity corresponding to the prediction mode is adjusted according to the measurement value corresponding to the reconstructed samples. Since the measurement value corresponding to the reconstructed samples around the current coding block can reflect the difference between the reconstructed samples around the current coding block and the current coding block, the prediction granularity can be reasonably adjusted according to the difference, thus ensuring the prediction efficiency of the prediction in the image reconstruction process.

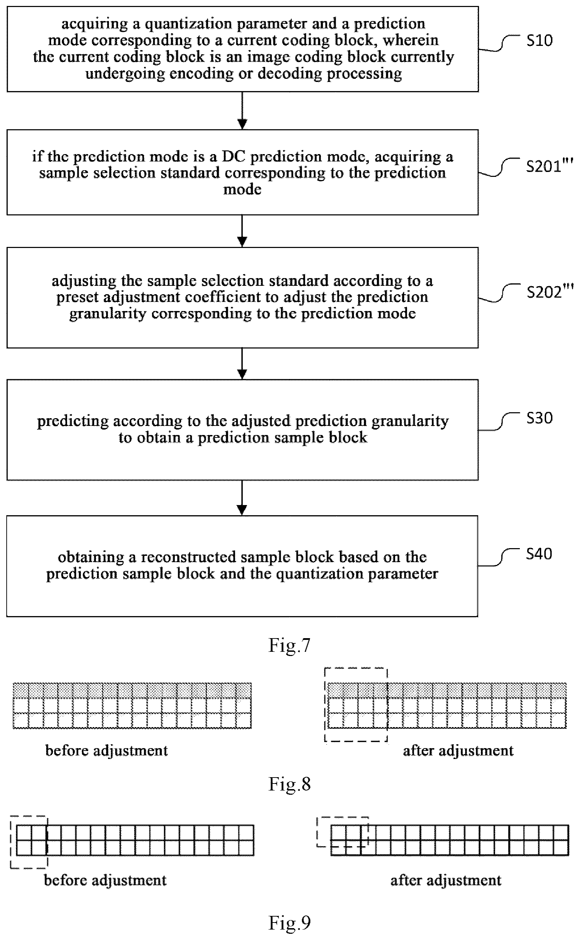

Referring to Fig. 7, Fig. 7 is a schematic flow diagram of a fifth embodiment of an image reconstruction method of the present application.

Based on the above first embodiment, the step S20 of the image reconstruction method in the present embodiment includes:

step S201‴: if the prediction mode is a DC prediction mode, acquiring a sample selection standard corresponding to the prediction mode.

It should be noted that the DC prediction mode is to select the reconstructed sample block on the upper and/or the left side of the to-be-predicted coding block as a reference sample block, and then predict the to-be-predicted coding block according to the pixel mean of the reference sample block. The sample selection standard corresponding to the prediction mode can be the selection standard of selecting the reference sample block in prediction.

Step S202‴: adjusting the sample selection standard according to a preset adjustment coefficient to adjust the prediction granularity corresponding to the prediction mode.

It should be noted that the preset adjustment coefficient can be a preset fixed threshold or a value read from the high-level syntax, wherein the high-level syntax can at least include sequence-level syntax, image-level syntax or slice-level syntax. Wherein, the administrator of the decoding device or the encoding device can set different preset adjustment coefficients for different prediction modes.

In actual use, adjusting the sample selection standard according to the preset adjustment coefficient to adjust the prediction granularity corresponding to the prediction mode can include decreasing or increasing the sample selection standard according to the preset adjustment coefficient, so as to adjust the prediction granularity corresponding to the prediction mode. For example, assuming that the prediction mode is DC prediction mode with the sample selection standard of M*N, and the preset adjustment coefficient of 1/4, then, the sample selection standard can be adjusted to (M/4) xN.

In practical application, if the prediction mode is the DC prediction mode, whether the quantization parameter is to be adjusted can be detected firstly when adjusting the sample selection standard according to the preset adjustment coefficient. If the quantization parameter is to be adjusted, the sample selection standard may be adjusted according to the preset adjustment coefficient; if the quantization parameter is not to be adjusted, the sample selection standard may not be adjusted according to the preset adjustment coefficient. For example, when a coding block with a width CbWidth and a height CbHeight is in DC prediction mode, the code example of the method for calculating the prediction sample PredMatrix of the current coding block is as follows:

```
for (x=0; x<CbWidth; x++) {
    for (y=0; y<CbHeight; y++) {
    rr = 0
    srr[0] = srr[1] = srr[2] = srr[3] = 0
    for (i=1; i<=CbWidth; i++) {
        rr += r[i]
        srr[(i - 1) >> 2] += r[i]
    }
    if (!BwqFlag) {
        PredMatrix[x][y] = (rr + (CbWidth >> 1)) / CbWidth
    } else {
        PredMatrix[x][y] = (srr[x >> 2] + (CbWidth >> 3)) / (CbWidth >> 2)
    }
    }
}
```

Wherein, srr[0], srr[1], srr[2], srr[3] are four code variables corresponding to the prediction values of 4 sample sub-blocks, each of the 4 sample sub-blocks comprises 4*2 samples each having a standard of 1*1, and BwqFlag is the indicative information of the quantization parameter adjustment of the current coding block. Assuming that the coordinates of a sample in the upper left corner of the current coding block in the sample matrix I are (x0, y0), its upper reference sample r[i] and the left reference sample c[j] are obtained according to the following rules:

a) initializing r[i] and c[j] to

$$2BitDepth[component]-1 \quad (i=0\sim(CbWidth[component]+2), j=0\sim CbHeight[component]) ;$$

b) if all samples with coordinates (x0+i-1, y0-1) (i=1 ~ CbWidth[component]) are "available", then r[i] is equal to I [x0+i-1][y0-1], and r[i] is "available"; otherwise, r[i] is "unavailable";

c) if the sample with coordinates (x0+i-1, y0-1) (i= (CbWidth[component]+1)~(CbWidth[component]+2)) is "available", then r[i] is equal to I[x0+i-1][y0-1], and r[i] is "available"; otherwise, r[i] is equal to r[CbWidth[component]], and whether r[i] is "available" depends on whether r[CbWidth [component]] is "available";

d) If all samples with coordinates (x0-1, y0+j-1) (j=1 ~ CbHeight[component]) are "available", then c[j] is equal to I[x0-1][y0+j-1], and c[j] is "available"; otherwise, c[j] is "unavailable";

e) if the sample with coordinates (x0-1, y0-1) is "available", then r[0] is equal to I[x0-1][y0-1], and r[0] is "available"; otherwise

    1) if r[1] is "available" and c[1] is "unavailable", then r[0] is equal to r[1], and r[0] is "available"; otherwise

    2) if c[1] is "available" and r[1] is "unavailable", then r[0] is equal to c[1] and r[0] is "available"; otherwise

    3) if r[1] is "available" and c[1] is "available", then r[0] is equal to r[1], and r[0] is "available"; otherwise, r[0] is "unavailable".

Wherein, the sample "existing" means that the sample is in the image and belongs to the same strip as the current coding unit; otherwise, the sample "does not exist". If an image sample "does not exist" or the sample has not been decoded, then this sample is "unavailable"; otherwise, this sample is "available".

For ease of understanding, it is explained in combination with Fig. 8, but the present solution is not limited to this. Fig. 8 is a schematic diagram of standard adjustment in DC prediction mode in the present embodiment. As shown in Fig. 8, before adjustment, the sample selection standard in the DC prediction mode is 16*1, which means selecting 16 dark colored reconstructed sample sub-blocks with a standard of 1*1 in the first row of Fig. 8 as reference samples, and predicting 16*2 samples with a standard of 1*1 below. At this time, the preset adjustment coefficient is 1/4. After adjustment, the sample selection standard is 4*1, which means selecting reconstructed sample sub-blocks in the first row with 4 reconstructed sample sub-blocks as a group, as reference samples (as shown in the dotted box in Fig. 8), predicting the corresponding 4*2 sample sub-blocks the a standard of 1*1 below the selected reconstructed sample sub-blocks, and completing the prediction of the 16*2 sample sub-blocks with a standard of 1*1 below after 4 predictions. At this time, although the number of predictions will become more, the reference samples used in prediction are closer to the to-be-predicted samples, more details can be reserved in prediction, and the calculated residual will be smaller, thus improving the subjective lossless performance.

In the actual use process, when the prediction mode is the IBC prediction mode, the adjustment can also be performed in a similar way to the DC prediction mode. Then, step S20 described in the present embodiment includes:

if the prediction mode is an IBC prediction mode, acquiring a sample selection standard corresponding to the prediction mode;

adjusting the sample selection standard according to a preset adjustment coefficient to adjust the prediction granularity corresponding to the prediction mode.

It should be noted that the IBC prediction mode is to select, within a certain range on the left or upper side of the to-be-predicted coding block, the reconstructed sample block with the same standard as the to-be-predicted coding block as the reference sample block, and then predict the to-be-predicted coding block according to the reference pixel of the reference sample block.

For ease of understanding, it is explained in combination with Fig. 9, but the present solution is not limited to this. Fig. 9 is a schematic diagram of standard adjustment in IBC prediction mode in the present embodiment. As shown in Fig. 9, before adjustment, the sample selection standard in IBC prediction mode is 2*2, which means selecting, around the to-be-predicted sample, a sample sub-block with a standard of 2*2 as the reference sample (as shown in the dotted box before adjustment in Fig. 9). At this time, the preset adjustment coefficient is 1/2. After adjustment, the sample selection standard is adjusted to 2*1, and then a sample sub-block with a standard of 2*2 will be selected around the to-be-predicted sample as the reference sample (as shown in the dotted box after adjustment in Fig. 9). Although the number of predictions will become more, the reference sample selection in prediction is more flexible, and a sample closer to the to-be-predicted sample can be selected as the reference sample, more details can be reserved during prediction, and the calculated residual will be smaller, thus improving the subjective lossless performance.

It should be noted that, for other similar prediction modes, the standard adjustment can also be performed in a similar method to the present embodiment, to adjust the corresponding prediction granularity, which is not limited in the present embodiment.

In the present embodiment, if the prediction mode is the DC prediction mode or the IBC prediction mode, the sample selection standard corresponding to the prediction mode are acquired; the sample selection standard is adjusted according to the preset adjustment coefficient to adjust the prediction granularity corresponding to the prediction mode. Since different adjustment coefficients can be set for different prediction modes according to actual needs, adjusting the prediction granularity corresponding to the prediction mode through the preset adjustment coefficient can make the reference sample selection more flexible in prediction, thus improving the prediction efficiency of the prediction during image reconstruction.

In addition, an embodiment of the present application also proposes a storage medium having stored thereon an image reconstruction program which, when executed by a processor, carries out the image reconstruction methods described above.

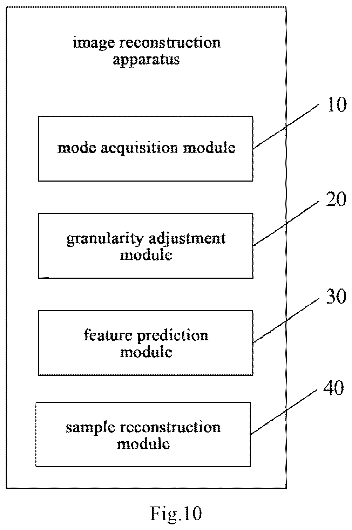

Referring to Fig. 10, Fig. 10 is a structural block diagram of a first embodiment of an image reconstruction apparatus of the present application.

As shown in Fig. 10, the image reconstruction apparatus proposed in the embodiment of the present application includes:

a mode acquisition module 10, configured to acquire a quantization parameter and a prediction mode corresponding to a current coding block, wherein the current coding block is an image coding block currently undergoing encoding or decoding processing;

a granularity adjustment module 20, configured to adjust a prediction granularity corresponding to the prediction mode;

a feature prediction module 30, configured to predict according to the adjusted prediction granularity to obtain a prediction sample block;

a sample reconstruction module 40, configured to obtain a reconstructed sample block based on the prediction sample block.

In the present application, the quantization parameter and the prediction mode corresponding to the current coding block are acquired, the prediction granularity corresponding to the prediction mode is adjusted, prediction is performed according to the adjusted prediction granularity to obtain the prediction sample block, and the reconstructed sample block is obtained based on the prediction sample block and the quantization parameter. Since the quantization parameter and the prediction mode for the current coding block are acquired firstly, and then the granularity corresponding to the prediction mode is adjusted and prediction is performed based on the adjusted granularity, and then the image reconstruction is performed according to the prediction result and the quantization parameter, it is ensured that the prediction granularity can be dynamically adjusted with the content of the current coding block, thus making the prediction more accurate, reducing the residual value in the coding process, and improving the subjective lossless performance.

In one possible embodiment of the present application, the granularity adjustment module 20 is further configured to acquire visual complexity information and/or coding complexity information corresponding to the current coding block; and adjust the prediction granularity corresponding to the prediction mode according to the visual complexity information and/or the coding complexity information.

In one possible embodiment of the present application, the granularity adjustment module 20 is further configured to adjust the prediction granularity corresponding to the prediction mode if the visual complexity information is less than or equal to a preset complexity threshold; or, adjust the prediction granularity corresponding to the prediction mode if the coding complexity information is less than or equal to the preset complexity threshold; or, adjust the prediction granularity corresponding to the prediction mode if the visual complexity information is less than a preset visual complexity threshold and the coding complexity information is greater than a preset coding complexity threshold.

In one possible embodiment of the present application, the granularity adjustment module 20 is further configured to adjust the prediction granularity corresponding to the prediction mode if the visual complexity information is less than the preset visual complexity threshold and the current coding block is at a preset specified position; or, adjust the prediction granularity corresponding to the prediction mode if the coding complexity information is less than the preset coding complexity threshold and the current coding block is at the preset specified position; or, adjust the prediction granularity corresponding to the prediction mode if the visual complexity information is less than the preset visual complexity threshold, the coding complexity information is less than the preset coding complexity threshold, and the current coding block is at the preset specified position.

In one possible embodiment of the present application, the granularity adjustment module 20 is further configured to acquire quantization parameters corresponding to other coding blocks which are in the same coding unit as the current coding block; and adjust the prediction granularity corresponding to the prediction mode if all of the quantization parameters corresponding to the other coding blocks are not a preset parameter value, the current coding block is not at the preset specified position, and the coding complexity information is less than the preset coding complexity threshold.

In one possible embodiment of the present application, the granularity adjustment module 20 is further configured to determine the quantization parameter for the current coding block according to the visual complexity information and/or the coding complexity information; and adjust the prediction granularity corresponding to the prediction mode according to the quantization parameter.

In one possible embodiment of the present application, the granularity adjustment module 20 is further configured to adjust the prediction granularity corresponding to the prediction mode if the quantization parameter is less than or equal to a preset quantization threshold.

In one possible embodiment of the present application, the granularity adjustment module 20 is further configured to acquire a utilization rate of the bitstream buffer; adjust the prediction granularity corresponding to the prediction mode if the quantization parameter is less than or equal to the preset quantization threshold and the utilization rate is less than a preset utilization rate threshold.

In one possible embodiment of the present application, the granularity adjustment module 20 is further configured to adjust the prediction granularity corresponding to the prediction mode if the current coding block is at a preset specified position.

In one possible embodiment of the present application, the granularity adjustment module 20 is further configured to acquire reconstructed samples around the current coding block; and adjust the prediction granularity corresponding to the prediction mode according to a measurement value corresponding to the reconstructed samples.

In one possible embodiment of the present application, the measurement value is a variance, and the reconstructed samples include upper reconstructed samples and/or left reconstructed samples;

the granularity adjustment module 20 is further configured to adjust the prediction granularity corresponding to the prediction mode if a variance of the upper reconstructed samples is greater than a preset upper threshold; or, adjust the prediction granularity corresponding to the prediction mode if the variance of the left reconstructed samples is less than a preset left threshold.

In one possible embodiment of the present application, the measurement value is a mean, and the reconstructed samples include upper reconstructed samples and left reconstructed samples;

The granularity adjustment module 20 is further configured to acquire an absolute value of a difference between a mean of the upper reconstructed samples and a mean of the left reconstructed samples; and adjust the prediction granularity corresponding to the prediction mode if the absolute value of the difference is less than a preset difference threshold,.

In one possible embodiment of the present application, the measurement value is a gradient value;

the granularity adjustment module 20 is further configured to adjust the prediction granularity corresponding to the prediction mode if the gradient values corresponding to the reconstructed samples are all less than a first preset gradient value; or, adjust the prediction granularity corresponding to the prediction mode if the gradient value corresponding to any one of the reconstructed samples is greater than a second preset gradient value, and the second preset gradient value is greater than the first preset gradient value.

In one possible embodiment of the present application, the granularity adjustment module 20 is further configured to acquire a utilization rate of the bitstream buffer; and adjust the prediction granularity corresponding to the prediction mode if the utilization rate is less than the preset utilization rate threshold.

In one possible embodiment of the present application, the granularity adjustment module 20 is further configured to acquire a sample selection standard corresponding to the prediction mode if the prediction mode is a DC prediction mode or an IBC prediction mode; adjust the sample selection standard according to a preset adjustment coefficient to adjust the prediction granularity corresponding to the prediction mode.

In one possible embodiment of the present application, the image reconstruction apparatus further includes a quantization parameter adjustment module which is further configured to adjust the quantization parameter;

The granularity adjustment module 20 is further configured to acquire a quantization parameter adjustment manner for adjusting the quantization parameter; adjust the prediction granularity corresponding to the prediction mode according to the quantization parameter adjustment manner.

In one possible embodiment of the present application, the quantization parameter adjustment module is further configured to adjust the quantization parameter corresponding to a target sample in the current coding block.

In one possible embodiment of the present application, the quantization parameter adjustment manner is determined according to indicative information.

In one possible embodiment of the present application, at least one of the preset complexity threshold, the preset visual complexity threshold, the preset specified position, the preset quantization threshold, the preset upper threshold, the preset left threshold, the preset difference threshold, the preset utilization rate threshold, the preset adjustment coefficient, and the preset gradient value is a preset value, or a value read from the high-level syntax, wherein the high-level syntax includes sequence-level syntax, image-level syntax, or slice-level syntax.

It should be understood that the above is only examples for illustration, and does not constitute any limitation to the technical solutions of the present application. In specific applications, those skilled in the art can set according to needs, which is not limited in the present application.

It should be noted that the workflow described above is only schematic and does not constitute limitation to the protection scope of the present application. In practical applications, those skilled in the art can select a part or all of the workflow according to actual needs to achieve the purpose of the solution of the embodiment, which is not limited here.

In addition, for the technical details not described in detail in the present embodiment, please refer to the image reconstruction method provided by any embodiment of the present application, which will not be repeated here.

In addition, it should be noted that the terms "include", "contain" or any other variant thereof are intended to cover non-exclusive inclusion herein, so that a process, method, article or system that includes a series of elements not only includes those elements, but also includes other elements not explicitly listed, or also includes elements inherent in such process, method, article or system. In the absence of more restrictions, the elements defined by the statement "including one..." do not exclude that there are other identical elements in the process, method, article or system that includes this element.

The above serial number of the embodiments of the present application is only for description and does not represent that one embodiment is more advantageous or less advantageous than another embodiment.

Through the above description of the embodiments, those skilled in the art can clearly understand that the above embodiment method can be realized by means of software in combination with the necessary general hardware platform; of course, it can also be realized by means of hardware. However, in many cases, the former is a better implementation. Based on this understanding, the technical solution of the present application in essence or the part of the technical solution of the present application that contributes to the prior art can be embodied in the form of a software product. The computer software product is stored in a storage medium (such as Read Only Memory (ROM)/RAM, magnetic disc, optical disc), and includes several instructions to enable a terminal device (which can be a mobile phone, computer, server, or network device, etc.) to carry out the methods described in various embodiments of the present application.

The above are only optional embodiments of the present application, which do not limit the patent scope of the present application. Any equivalent structure or equivalent process transformation made by using the contents of the description and drawings of the present application, or direct or indirect application in other related technical fields, is similarly included in the scope of patent protection of the present application.

## Claims

1. An image reconstruction method, comprising:

   acquiring a quantization parameter and a prediction mode corresponding to a current coding block, wherein the current coding block is an image coding block currently undergoing encoding or decoding processing;
   adjusting a prediction granularity corresponding to the prediction mode;
   predicting according to the adjusted prediction granularity to obtain a prediction sample block;
   obtaining a reconstructed sample block based on the prediction sample block and the quantization parameter.

2. The image reconstruction method according to claim 1, wherein before adjusting the prediction granularity corresponding to the prediction mode, the method further comprises:

   adjusting the quantization parameter;

adjusting the prediction granularity corresponding to the prediction mode, comprises:

acquiring a quantization parameter adjustment manner for adjusting the quantization parameter;
adjusting the prediction granularity corresponding to the prediction mode according to the quantization parameter adjustment manner.

3. The image reconstruction method according to claim 2, wherein adjusting the quantization parameter, comprises: adjusting the quantization parameter corresponding to a target sample in the current coding block.

4. The image reconstruction method according to claim 2, wherein the quantization parameter adjustment manner is determined according to indicative information.

5. An image reconstruction method, comprising:

acquiring a quantization parameter and a prediction mode corresponding to a current coding block, wherein the current coding block is an image coding block currently undergoing encoding or decoding processing;
decreasing a prediction granularity corresponding to the prediction mode;
predicting according to the adjusted prediction granularity to obtain a prediction sample block;
obtaining a reconstructed sample block based on the prediction sample block and the quantization parameter.

6. The image reconstruction method according to claim 5, wherein before decreasing the prediction granularity corresponding to the prediction mode, the method further comprises:

adjusting the quantization parameter;
decreasing the prediction granularity corresponding to the prediction mode, comprises:

acquiring a quantization parameter adjustment manner for adjusting the quantization parameter;
decreasing the prediction granularity corresponding to the prediction mode according to the quantization parameter adjustment manner.

7. The image reconstruction method according to claim 6, wherein adjusting the quantization parameter, comprises: adjusting the quantization parameter corresponding to a target sample in the current coding block.

8. The image reconstruction method according to claim 7, wherein the quantization parameter adjustment manner is determined according to indicative information.

9. The image reconstruction method according to claim 8, wherein the target sample is all samples in the current coding block, or a sample in the current coding block on which quantization parameter adjustment is specified to be performed.

10. The image reconstruction method according to claim 6, wherein adjusting the quantization parameter, comprises: adjusting the quantization parameter according to indicative information, coding complexity information and/or reconstructed samples around the current coding block.

11. An image reconstruction apparatus, comprising:

a mode acquisition module, configured to acquire a quantization parameter and a prediction mode corresponding to a current coding block, wherein the current coding block is an image coding block currently undergoing encoding or decoding processing;
a granularity adjustment module, configured to adjust a prediction granularity corresponding to the prediction mode;
a feature prediction module, configured to predict according to the adjusted prediction granularity to obtain a prediction sample block;
a sample reconstruction module, configured to obtain a reconstructed sample block based on the prediction sample block.

12. The image reconstruction apparatus according to claim 11, wherein the image reconstruction apparatus further comprises:

a parameter adjustment module, configured to adjust the quantization parameter before decreasing the prediction granularity corresponding to the prediction mode;

an adjustment manner acquisition module, configured to acquire a quantization parameter adjustment manner for adjusting the quantization parameter;

wherein, the parameter adjustment module is further configured to adjust the prediction granularity corresponding to the prediction mode according to the quantization parameter adjustment manner.

13. The image reconstruction apparatus according to claim 12, wherein the parameter adjustment module is further configured to adjust the quantization parameter corresponding to a target sample in the current coding block.

14. The image reconstruction apparatus according to claim 12, wherein the quantization parameter adjustment manner is determined according to indicative information.

15. An image reconstruction apparatus, comprising:

a mode acquisition module, configured to acquire a quantization parameter and a prediction mode corresponding to a current coding block, wherein the current coding block is an image coding block currently undergoing encoding or decoding processing;

a granularity adjustment module, configured to decrease a prediction granularity corresponding to the prediction mode;

a feature prediction module, configured to predict according to the adjusted prediction granularity to obtain a prediction sample block;

a sample reconstruction module, configured to obtain a reconstructed sample block based on the prediction sample block.

16. The image reconstruction apparatus according to claim 15, wherein the image reconstruction apparatus further comprises:

a parameter adjustment module, configured to adjust the quantization parameter before decreasing the prediction granularity corresponding to the prediction mode;

an adjustment manner acquisition module, configured to acquire a quantization parameter adjustment manner for adjusting the quantization parameter;

wherein, the parameter adjustment module is further configured to decrease the prediction granularity corresponding to the prediction mode according to the quantization parameter adjustment manner.

17. The image reconstruction apparatus according to claim 16, wherein the parameter adjustment module is further configured to adjust the quantization parameter corresponding to a target sample in the current coding block.

18. The image reconstruction apparatus according to claim 16, wherein the quantization parameter adjustment manner is determined according to indicative information.

19. An encoding device comprising a memory, a processor and an encoding program stored on the memory and running on the processor, wherein the encoding program is configured to carry out the image reconstruction method according to any one of claims 1 to 4.

20. An encoding device comprising a memory, a processor and an encoding program stored on the memory and running on the processor, wherein the encoding program is configured to carry out the image reconstruction method according to any one of claims 5 to 10.

21. A decoding device comprising a memory, a processor and a decoding program stored on the memory and running on the processor, wherein the decoding program is configured to carry out the image reconstruction method according to any one of claims 1 to 4.

22. A decoding device comprising a memory, a processor and a decoding program stored on the memory and running on the processor, wherein the decoding program is configured to carry out the image reconstruction method according to any one of claims 5 to 10.

23. A storage medium having stored thereon an image reconstruction program, which, when executed, carries out the image reconstruction method according to any one of claims 1 to 10.

1005

1001

processor

1002

1003          1004

user interface          network interface

operating system

network
communication module

user interface module

encoding and/or
decoding program

memory

Fig.1

acquiring a quantization parameter and a prediction mode
corresponding to a current coding block, wherein the current
coding block is an image coding block currently undergoing
encoding or decoding processing

S10

adjusting a prediction granularity corresponding
to the prediction mode

S20

predicting according to the adjusted prediction granularity
to obtain a prediction sample block

S30

obtaining a reconstructed sample block based on the
prediction sample block and the quantization parameter

S40

Fig.2

Fig.3

encoder

rate control

| rate control initialization | complexity calculation | quantization parameter export | rate control update |

image input → slice division → block division → prediction → quantization coefficient encoding → bitstream interleaving (optional) → bitstream output

inverse quantization → reconstruction → reconstructed image output

decoder

rate control

| rate control initialization | quantization parameter export | rate control update | inverse quantization | reconstruction → reconstructed image output |

bitstream input → deinterleaving (optional) → complexity analysis → other syntax analysis → prediction

acquiring quantization parameters and a prediction mode
corresponding to a current encoding block, the current encoding
block is an image encoding block currently undergoing
encoding and decoding processing ⟋⌐ S10

acquiring visual complexity information and/or coding
complexity information corresponding to the current
coding block ⟋⌐ S201

adjusting a prediction granularity corresponding to the
prediction mode according to the visual complexity
information and/or the coding complexity information ⟋⌐ S202

predicting according to an adjusted prediction granularity
to obtain a prediction sample block ⟋⌐ S30

obtaining a reconstruction sample block based on the
prediction sample block and the quantization parameters ⟋⌐ S40

Fig.4

acquiring quantization parameters and a prediction mode corresponding to a current encoding block, the current encoding block is an image encoding block currently undergoing encoding and decoding processing ⟍⟋ S10

↓

acquiring visual complexity information and/or coding complexity information corresponding to the current coding block ⟍⟋ S201

↓

determining the quantization parameter for the current coding block according to the visual complexity information and/or the coding complexity information ⟍⟋ S202'

↓

adjusting the prediction granularity corresponding to the prediction mode according to the quantization parameters ⟍⟋ S203'

↓

predicting according to an adjusted prediction granularity to obtain a prediction sample block ⟍⟋ S30

↓

obtaining a reconstruction sample block based on the prediction sample block and the quantization parameters ⟍⟋ S40

Fig.5

acquiring a quantization parameter and a prediction mode
corresponding to a current coding block, wherein the current
coding block is an image coding block currently undergoing
encoding or decoding processing — S10

↓

acquiring reconstructed samples around the current
encoding block — S201"

↓

adjusting the prediction granularity corresponding to the
prediction mode according to a measurement value
corresponding to the reconstructed samples — S202"

↓

predicting according to the adjusted prediction granularity
to obtain a prediction sample block — S30

↓

obtaining a reconstructed sample block based on the
prediction sample block and the quantization parameter — S40

Fig.6

```
┌─────────────────────────────────────────────────────┐
│   acquiring a quantization parameter and a prediction │
│   mode corresponding to a current coding block, wherein│ ─── S10
│   the current coding block is an image coding block currently│
│      undergoing encoding or decoding processing        │
└─────────────────────────────────────────────────────┘
                          │
                          ▼
┌─────────────────────────────────────────────────────┐
│   if the prediction mode is a DC prediction mode, acquiring a │
│   sample selection standard corresponding to the prediction│ ─── S201'''
│                         mode                           │
└─────────────────────────────────────────────────────┘
                          │
                          ▼
┌─────────────────────────────────────────────────────┐
│   adjusting the sample selection standard according to a │
│   preset adjustment coefficient to adjust the prediction│ ─── S202'''
│      granularity corresponding to the prediction mode  │
└─────────────────────────────────────────────────────┘
                          │
                          ▼
┌─────────────────────────────────────────────────────┐
│   predicting according to the adjusted prediction granularity │ ─── S30
│            to obtain a prediction sample block         │
└─────────────────────────────────────────────────────┘
                          │
                          ▼
┌─────────────────────────────────────────────────────┐
│   obtaining a reconstructed sample block based on the  │ ─── S40
│   prediction sample block and the quantization parameter│
└─────────────────────────────────────────────────────┘
```

Fig.7

before adjustment          after adjustment

Fig.8

before adjustment          after adjustment

Fig.9

image reconstruction
apparatus

mode acquisition module — 10

granularity adjustment
module — 20

feature prediction
module — 30

sample reconstruction
module — 40

Fig.10

## INTERNATIONAL SEARCH REPORT

| International application No. |
|---|
| **PCT/CN2023/141200** |

### A. CLASSIFICATION OF SUBJECT MATTER

H04N19/176(2014.01)i; H04N19/124(2014.01)n; H04N19/157(2014.01)n

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CBABS, CNTXT, ENTXTC, ENTXT, VEN, CNKI, IEEE, JVET: 变, 大小, 调整, 分割, 改变, 划分, 颗粒度, 块, 量化, 参数, 深度, 预测块, 预测模式, QP, change, size, adjust, divide, partition, granularity, block, quantization, quantization parameter, depth, prediction block, prediction mode

### C. DOCUMENTS CONSIDERED TO BE RELEVANT

| Category* | Citation of document, with indication, where appropriate, of the relevant passages | Relevant to claim No. |
|---|---|---|
| X | US 2018176565 A1 (INTEL CORP.) 21 June 2018 (2018-06-21) description, paragraphs 8-123 | 1-23 |
| A | CN 104221383 A (MITSUBISHI ELECTRIC CORP.) 17 December 2014 (2014-12-17) entire document | 1-23 |
| A | CN 114727108 A (BEIJING KINGSOFT CLOUD NETWORK TECHNOLOGY CO., LTD.) 08 July 2022 (2022-07-08) entire document | 1-23 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 March 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141200**

| Patent document cited in search report | | | Publication date (day/month/year) | Patent family member(s) | | | Publication date (day/month/year) |
|---|---|---|---|---|---|---|---|
| US | 2018176565 | A1 | 21 June 2018 | US | 10142633 | B2 | 27 November 2018 |
| CN | 104221383 | A | 17 December 2014 | JP | 2016226035 | A | 28 December 2016 |
| | | | | JP | 6758125 | B2 | 23 September 2020 |
| | | | | CA | 2997462 | A1 | 17 October 2013 |
| | | | | CA | 2997462 | C | 13 November 2018 |
| | | | | HK | 1256575 | A1 | 27 September 2019 |
| | | | | MX | 2019003608 | A | 17 June 2019 |
| | | | | MX | 2014012311 | A | 14 November 2014 |
| | | | | MX | 347522 | B | 27 April 2017 |
| | | | | RU | 2586029 | C1 | 10 June 2016 |
| | | | | CA | 3017184 | A1 | 17 October 2013 |
| | | | | CA | 3017184 | C | 02 July 2019 |
| | | | | TW | 201620307 | A | 01 June 2016 |
| | | | | TWI | 583183 | B | 11 May 2017 |
| | | | | KR | 20150003286 | A | 08 January 2015 |
| | | | | KR | 101612217 | B1 | 12 April 2016 |
| | | | | EP | 2838259 | A1 | 18 February 2015 |
| | | | | EP | 2838259 | A4 | 16 December 2015 |
| | | | | JP | 2018121352 | A | 02 August 2018 |
| | | | | JP | 6820115 | B2 | 27 January 2021 |
| | | | | JPWO | 2013154008 | A1 | 17 December 2015 |
| | | | | JP | 6226863 | B2 | 08 November 2017 |
| | | | | CA | 2960238 | A1 | 17 October 2013 |
| | | | | CA | 2960238 | C | 14 May 2019 |
| | | | | RU | 2683183 | C1 | 26 March 2019 |
| | | | | US | 2016021379 | A1 | 21 January 2016 |
| | | | | US | 10009616 | B2 | 26 June 2018 |
| | | | | TW | 201720159 | A | 01 June 2017 |
| | | | | TWI | 650008 | B | 01 February 2019 |
| | | | | KR | 20190017061 | A | 19 February 2019 |
| | | | | KR | 102024518 | B1 | 24 September 2019 |
| | | | | JP | 2021093732 | A | 17 June 2021 |
| | | | | JP | 7055230 | B2 | 15 April 2022 |
| | | | | JP | 2020065277 | A | 23 April 2020 |
| | | | | JP | 6835448 | B2 | 24 February 2021 |
| | | | | RU | 2719449 | C1 | 17 April 2020 |
| | | | | KR | 20180037309 | A | 11 April 2018 |
| | | | | KR | 101950657 | B1 | 20 February 2019 |
| | | | | MX | 363952 | B | 08 April 2019 |
| | | | | KR | 20170087961 | A | 31 July 2017 |
| | | | | KR | 101847365 | B1 | 09 April 2018 |
| | | | | SG | 10201607842 | VA | 29 November 2016 |
| | | | | TW | 201404176 | A | 16 January 2014 |
| | | | | TWI | 542200 | B | 11 July 2016 |
| | | | | KR | 20150069038 | A | 22 June 2015 |
| | | | | KR | 101764037 | B1 | 01 August 2017 |
| | | | | TW | 201921944 | A | 01 June 2019 |
| | | | | TWI | 706669 | B | 01 October 2020 |
| | | | | HK | 1256576 | A1 | 27 September 2019 |
| | | | | HK | 1258150 | A1 | 08 November 2019 |

Form PCT/ISA/210 (patent family annex) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| | | | | SG | 10201808973 | XA | 29 November 2018 |
| | | | | RU | 2638743 | C1 | 15 December 2017 |
| | | | | SG | 10201800588 | QA | 27 February 2018 |
| | | | | CA | 3043099 | A1 | 17 October 2013 |
| | | | | CA | 3043099 | C | 15 October 2019 |
| | | | | SG | 11201406036 | RA | 27 November 2014 |
| | | | | WO | 2013154008 | A1 | 17 October 2013 |
| | | | | TW | 202103492 | A | 16 January 2021 |
| | | | | TWI | 717309 | B | 21 January 2021 |
| | | | | HK | 1202196 | A1 | 18 September 2015 |
| | | | | CA | 2868255 | A1 | 17 October 2013 |
| | | | | CA | 2868255 | C | 17 April 2018 |
| | | | | RU | 2707928 | C1 | 02 December 2019 |
| CN | 114727108 | A | 08 July 2022 | None | | | |

Form PCT/ISA/210 (patent family annex) (July 2022)

**REFERENCES CITED IN THE DESCRIPTION**

**Patent documents cited in the description**

- CN 202310264176